# EUROPÄISCHE PATENTSCHRIFT

(11) **EP 0 494 437 B1**
(45) Veröffentlichungstag und Bekanntmachung des Hinweises auf die Patenterteilung: **27.09.1995**
(21) Anmeldenummer: 91122138.0
(22) Anmeldetag: 23.12.1991
(51) Int. Cl.: F16C 33/78

(54) **Dichtung für ein Lager einer Breitstreckwalze**
Spreader roll bearing seal
Etanchéité pour un palier de rouleau élargisseur

(30) Priorität: 08.01.1991 DE 4100347
(43) Veröffentlichungstag der Anmeldung: 15.07.1992
(73) Patentinhaber: H. WITTLER GMBH & CO. KG, D-33758 Schloss Holte-Stukenbrock (DE)
(72) Erfinder: Scheek, Bernhard, W-4807 Borgholzhausen (DE)
(74) Vertreter: Schirmer, Siegfried, Dipl.-Ing.

(56) Entgegenhaltungen:
- DE-A- 3 324 169
- DE-A- 3 340 524
- DE-A- 3 738 111
- FR-A- 2 041 309
- GB-A- 706 876
- GB-A- 2 174 765

## Beschreibung

Die Erfindung betrifft eine Dichtung für ein Lager einer Breitstreckwalze, bestehend aus einer gebogenen Achse und auf dieser Achse in geringem Abstand angeordneten Rohrabschnitten, wobei die Rohrabschnitte über Wälzlager auf der Achse abgestützt sind und die Wälzlager gegen Austritt von Öl oder Fett nach außen durch einen oder mehrere fest am Wälzlager anliegende O-Ringe sowie scheibenförmige Dichtringe abgedichtet sind.

Mit den bekannten Dichtungen nach den Patenten DE 33 24 160 und 33 40 524 wird eine Abdichtung des Fettraums von Breitstreckwalzen gegen ein Austreten von Öl oder Fett bei gleichzeitiger Rückführung des durch die Drehbewegung des Wälzlagers nach außen zentrifugierten Öls an die Lauffläche des Wälzlagers erreicht. Hierfür sind allerdings fertigungs- und montagemäßig entsprechende Aufwendungen erforderlich. Die Profilgebung des den Fettraum begrenzenden und abdichtenden Nilosrings ist nicht besonders geeignet, daß im Stillstand der Breitstreckwalze das zentrifugierte Öl dem Ölsumpf zuführbar ist.

Aus der DE-A 22 15 041 ist ein kombiniertes Sicherungs- und Dichtungselement aus Gummi bekannt, das mit einer hinterschnittenen Profilierung versehen ist. Diese bekannte Dichtung ist mit einer schleifenden Dichtlippe versehen, die durch eine Ringfeder andrückbar ist. Das aus Gummi bestehende Dichtungselement ist auf einen nicht geschlossenen Dichtungsring aufvulkanisiert, wodurch die Elastizität des Dichtungsrings eingeschränkt wird. Die Montage einer solchen Dichtung ist aufwendig, die außerdem nicht zweifelsfrei die erforderliche Abdichtung garantiert.

Ein mehrteiliger Dichtungsring ist aus der DE-A 37 38 111 bekannt. Dieser bekannte Dichtungsring benötigt zur Funktionsfähigkeit einen elastischen Balg, der beidseitig in je eine Ringnut eingelegt und durch eingedrückte Drahtringe festgeklemmt ist. Diese Ausbildung ist aufgrund der Mehrteiligkeit äußerst kompliziert und erfordert bei der Herstellung und Montage einen relativ großen Aufwand.

Der Erfindung liegt die Aufgabe zugrunde, eine Dichtung für Lager einer Breitstreckwalze der aufgezeigten Gattung so auszubilden, daß bei Vereinfachung der Montage und Fertigung im Stillstand der Breitstreckwalze eine Rückführung des zentrifugierten Öls in den Ölsumpf garantiert ist.

Diese Aufgabe wird erfindungsgemäß dadurch gelöst, daß der bzw. die O-Ringe in den unmittelbar am Wälzlager anliegenden, im wesentlichen rechteckigen Querschnitt aufweisenden Dichtungsring eingelegt sind, dessen Innenfläche zur Rückführung des zentrifugierten Öls mit einer hinterschnittenen umlaufenden Profilierung versehen ist, wobei die hinterschnittene Profilierung auf der Innenfläche des Dichtungsrings umlaufend angeordnet ist. In Ausgestaltung der Erfindung kann die hinterschnittene Profilierung jede beliebige Form aufweisen, die den Ölfluß an der glatten Innenfläche unterbricht und ein Abfließen des Öls verhindert. So kann die hinterschnittene Profilierung im Querschnitt gesehen einen bogenförmigen oder einen stufenförmigen Verlauf aufweisen. Bei einer bevorzugten Ausführung ist die hinterschnittene Profilierung im Querschnitt gesehen durch zwei Gerade gebildet, die unterschiedliche Längen aufweisen und in einem spitzen Winkel zueinander verlaufen können.

Zweckmäßige Ausgestaltungen der Erfindung sind in den weiteren Unteransprüchen aufgezeigt.

Die erfindungsgemäße Dichtung ist fertigungs- und montagemäßig äußerst vorteilhaft. Die hinterschnittene Profilierung auf der Innenfläche des Dichtungsrings unterbricht den Ölfluß und verhindert ein Abfließen des aus dem Schmierfett auszentrifugierten Öls im Stillstand der Breitstreckwalze. Dieses auszentrifugierte Öl wird über die hinterschnittene Profilierung in den Ölsumpf rückgeführt.

Der Erfindungsgegenstand umfaßt sowohl ein Wälzlager, als auch einen unmittelbar am Wälzlager anliegenden Dichtungsring. Der bzw. die O-Ring(e) dienen zur Abdichtung der Fuge zwischen Wälzlager und Dichtungsring.

Ein Ausführungsbeispiel der Erfindung ist in der Zeichnung dargestellt und wird nachfolgend näher beschrieben.
Es zeigen:

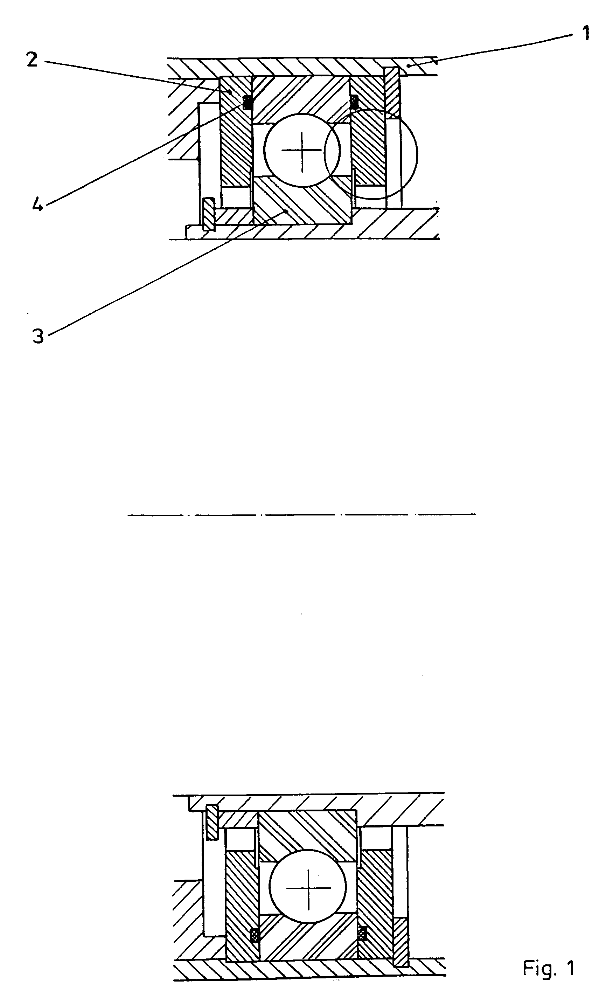

- Fig. 1: einen Schnitt durch ein Wälzlager einer Breitstreckwalze und
- Fig. 2: eine vergrößerte Darstellung der Innenfläche eines Dichtungsrings mit hinterschnittener Profilierung.

Ein Rohrabschnitt 1 ist über ein Wälzlager 3 auf einer Achse abgestützt. Ein mit einem O-Ring 4 versehener Dichtungsring 2 liegt unmittelbar am Wälzlager 3 an, wobei der O-Ring 4 unter Vorspannung in die im Dichtungsring 2 vorhandene Aufnahme 6 eingelegt ist.

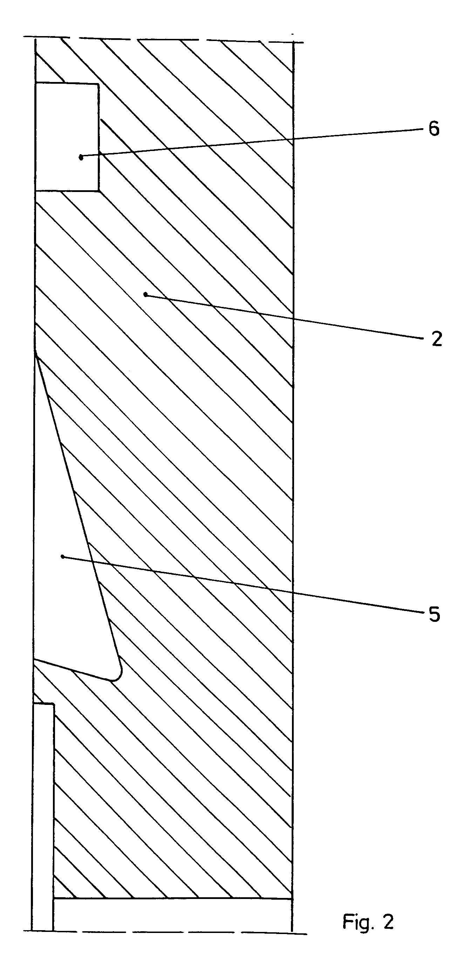

Die Innenfläche des Dichtungsrings 2 weist eine umlaufende hinterschnittene Profilierung 5 auf, die nach Fig. 2 durch zwei unterschiedlich lange Gerade gebildet ist, die in einem spitzen Winkel zueinander verlaufen. Die längere Gerade verläuft dabei unter einem Winkel von 15° und die kürzere Gerade unter einem Winkel von 60° zur Innenfläche des Dichtungsrings. Bei den vorgegebenen Parametern ergibt sich ein Verhältnis der Längen der kürzeren Gerade zur längeren Gerade von annähernd 1 : 3,5. Zweckmäßigerweise ist der Schnittpunkt der beiden Geraden ausgerundet.

Die erfindungsgemäße Ausbildung ist nicht nur vorteilhaft bei Breitstreckwalzen mit nicht ohne weiteres zugänglichem Fettraum des Wälzlagers mit drehendem Außenring anwendbar, sondern bei allen Ausführungen, bei denen die Laufdauer von Lagern, die nach der Montage schwer zugänglich sind, verlängert werden soll.

### Aufstellung der Bezugszeichen:

- 1: Rohrabschnitt
- 2: Dichtungsring
- 3: Wälzlager
- 4: O-Ring
- 5: hinterschnittene Profilierung
- 6: Aufnahme für O-Ring

## Patentansprüche

1. Dichtung für ein Lager einer Breitstreckwalze, bestehend aus einer gebogenen Achse und auf dieser Achse in geringem Abstand angeordneten Rohrabschnitten (1), wobei die Rohrabschnitte (1) über Wälzlager (3) auf der Achse abgestützt sind und die Wälzlager (3) gegen Austritt von Fett oder Öl nach außen durch einen oder mehrere fest am Wälzlager (3) anliegende O-Ringe (4) sowie scheibenförmige Dichtungsringe (2) abgedichtet sind, dadurch gekennzeichnet, daß der bzw. die O-Ringe (4) in den unmittelbar am Wälzlager (3) anliegenden, im wesentlichen rechteckigen Querschnitt aufweisenden Dichtungsring (2) eingelegt sind, dessen Innenfläche zur Rückführung des zentrifugierten Öls mit einer hinterschnittenen umlaufenden Profilierung (5) versehen ist.

2. Dichtung nach Anspruch 1, dadurch gekennzeichnet, daß die hinterschnittene Profilierung (5) im Querschnitt gesehen einen bogenförmigen Verlauf aufweist.

3. Dichtung nach Anspruch 1, dadurch gekennzeichnet, daß die hinterschnittene Profilierung (5) im Querschnitt gesehen einen stufenförmigen Verlauf aufweist.

4. Dichtung nach Anspruch 1, dadurch gekennzeichnet, daß die hinterschnittene Profilierung (5) im Querschnitt gesehen durch zwei Gerade gebildet ist.

5. Dichtung nach Anspruch 4, dadurch gekennzeichnet, daß die zwei Geraden der hinterschnittenen Profilierung (5) in einem spitzen Winkel zueinander verlaufen.

6. Dichtung nach Anspruch 4 oder 5, dadurch gekennzeichnet, daß die zwei Geraden der hinterschnittenen Profilierung (5) unterschiedliche Längen aufweisen.

7. Dichtung nach einem der Ansprüche 4 bis 6, dadurch gekennzeichnet, daß die längere Gerade der hinterschnittenen Profilierung (5) unter einem Winkel von annähernd 15° zur Innenfläche des Dichtungsrings (2) verläuft.

8. Dichtung nach einem der Ansprüche 4 bis 7, dadurch gekennzeichnet, daß die kürzere Gerade der hinterschnittenen Profilierung (5) unter einem Winkel von annähernd 60° zur Innenfläche des Dichtungsrings (2) verläuft.

9. Dichtung nach einem der Ansprüche 5 bis 8, dadurch gekennzeichnet, daß sich die Länge der kürzeren Geraden zur Länge der längereren Geraden der hinterschnittenen Profilierung (5) annähernd wie 1 : 3,5 verhält.

## Claims

1. Seal for a bearing of a width-stretching roller consisting of a curved axle and of pipe portions (1) arranged at a small spacing on this axle, wherein the pipe portions (1) are supported on the axle by way of rolling bearings (3) and the rolling bearings (3) are sealed against outward egress of grease or oil by one or more O-rings (4) lying against the rolling bearing (3) as well as by disc-shaped sealing rings (2), characterised thereby, that the or each O-ring (4) is laid into the sealing ring (2), which displays a substantially rectangular cross-section and lies directly against the rolling bearing (3) and the inward surface of which is provided with an encircling undercut profile (5) for the return of the centrifuged oil.

2. Seal according to claim 1, characterised thereby, that the undercut profile (5), as seen in cross-section, displays an arcuate course.

3. Seal according to claim 1, characterised thereby, that the undercut profile (5), as seen in cross-section, displays a stepped course.

4. Seal according to claim 1, characterised thereby, that the undercut profile (5), as seen in cross-section, is formed by two straight lines.

5. Seal according to claim 4, characterised thereby, that the two straight lines of the undercut profile (5) extend each at an acute angle to the other.

6. Seal according to claim 4 or 5, characterised thereby, that the two straight lines of the undercut profile (5) display different lengths.

7. Seal according to one of the claims 4 to 6, characterised thereby, that the longer straight line of the undercut profile (5) extends at an angle of approximately 15° to the inward surface of the sealing ring (2).

8. Seal according to one of the claims 4 to 7, characterised thereby, that the shorter straight line of the undercut profile (5) extends at an angle of approximately 60° to the inward surface of the sealing ring (2).

9. Seal according to one of the claims 4 to 8, characterised thereby, that the length of the shorter straight line is in a ratio of approximately 1:3.5 to the length of the longer straight line of the undercut profile (5).

## Revendications

1. Garniture d'étanchéité de palier d'un cylindre de laminoir élargisseur constitué d'un axe courbe et de plusieurs éléments tubulaires (1) rapprochés, montés sur cet axe où les éléments tubulaires prennent appui par l'intermédiaire de paliers à roulement (3) sur l'axe équipés, pour empêcher la sortie de graisse ou d'huile, d'un ou plusieurs joints toriques en appui fixe sur les paliers ainsi que de bagues d'étanchéité (2) en forme de disques, caractérisée en ce que le ou les joints toriques (4) sont insérés dans la ou les bagues d'étanchéité (2) qui sont directement au contact du palier (3), qui ont une section essentiellement rectangulaire et dont les faces internes servant à renvoyer l'huile centrifugée comportent une zone circulaire à profil à contre dépouille (5).

2. Garniture selon la revendication 1, caractérisée en ce que la zone à profil à contre dépouille (5), vue en coupe, a un tracé en arc.

3. Garniture selon la revendication 1, caractérisée en ce que la zone à profil à contre dépouille (5) , vue en coupe, a un tracé en gradins.

4. Garniture selon la revendication 1, caractérisée en ce que la zone à profil à contre dépouille (5), vue en coupe, est constituée de deux droites.

5. Garniture selon la revendication 4, caractérisée en ce que les deux droites dessinant la contre dépouille (5) se coupent à angle aigu.

6. Garniture selon la revendication 4 ou 5, caractérisée en ce que les deux droites dessinant la contre dépouille (5) sont d'inégales longueurs.

7. Garniture selon une des revendications 4 à 6, caractérisée en ce que la plus longue des droites dessinant la contre dépouille (5) fait un angle de 15° environ avec la face interne de la bague d'étanchéité (2)

8. Garniture selon une des revendications 4 à 7, caractérisée en ce que la plus courte des droites dessinant la contre dépouille (5) fait un angle d'environ 60° avec la face interne de la bague d'étanchéité (2).

9. Garniture d'étanchéité selon l'une des revendications 5 à 8, caractérisée en ce que la longueur de la droite la plus courte est à la longueur de la droite la plus longue de la contre-dépouille (5) dans un rapport voisin de 1 : 3,5.
